# EUROPÄISCHE PATENTSCHRIFT

(11) **EP 1 153 065 B1**
(45) Veröffentlichungstag und Bekanntmachung des Hinweises auf die Patenterteilung: **17.07.2002**
(21) Anmeldenummer: 00903625.2
(22) Anmeldetag: 25.01.2000
(51) Int. Cl.: C08J 7/04, C08G 81/02, C08J 7/18

(54) **VERFAHREN ZUR MODIFIZIERUNG VON POLYMERSUBSTRATEN DURCH OBERFLÄCHENFIXIERUNG EIGENSCHAFTSBESTIMMENDER MAKROMOLEKÜLE**
METHOD FOR MODIFYING POLYMER SUBSTRATES BY SURFACE FIXING OF FUNCTIONAL MACROMOLECULES
PROCEDE PERMETTANT DE MODIFIER LES SUBSTRATS POLYMERES PAR FIXATION EN SURFACE DE MACROMOLECULES CONDITIONNANT LEURS CARACTERISTIQUES

(30) Priorität: 26.01.1999 DE 19902948
(43) Veröffentlichungstag der Anmeldung: 14.11.2001
(73) Patentinhaber: Creavis Gesellschaft für Technologie und Innovation mbH, 45772 Marl (DE)
(72) Erfinder: OTTERSBACH, Peter, D-51570 Windeck (DE); LOHMER, Gunther, D-45470 Mülheim (DE)
(86) Internationale Anmeldenummer: EP0000545
(87) Internationale Veröffentlichungsnummer: WO0044818

(56) Entgegenhaltungen:
- WO-A-95/29203
- WO-A-97/39838
- DE-A- 19 809 054

## Beschreibung

Die Erfindung betrifft ein Verfahren zur Oberflächenmodifizierung von Polymersubstraten durch Aufpfropfung eigenschaftsbestimmender Makromoleküle.

Die Modifizierung von Kunststoffoberflächen, speziell von technisch genutzen Produkten, ist von großem wirtschaftlichen Interesse. Als technisch und wirtschaftlich bedeutend hat sich in diesem Zusammenhang vor allem die Pfropfpolymerisation aliphatisch ungesättiger Monomerer erwiesen, da hierdurch neue Verwendungsmöglichkeiten für bereits im Markt etablierte Standardkunststoffe gefunden werden können. Durch die Veränderungen der Kunststoffoberflächen können auf eine effiziente und ökonomische Art Produkte mit auf den speziellen Einsatzzweck optimierten Grenzflächeneigenschaften hergestellt werden. Diese veränderten Eigenschaften können unter anderem zu hydrophilierten, schmutzabweisenden, bedruckbaren, lösemittelbeständigeren und flammhemmenden Oberflächen führen. Einen Überblick über die vielfältigen Möglichkeiten zur Eigenschaftsveränderung synthetischer Polymere durch photoinduzierte Pfropfungen liefert Jr. J. C.Arthur in Dev. Polymer Photochem. 2 (1981) 39.

Es sind verschiedene Verfahren bekannt, mit denen die Oberflächen von Polymeren durch Pfropfpolymerisationen modifiziert werden können. Im allgemeinen geht der Pfropfreaktion eine Aktivierung der entsprechenden Oberfläche voraus, d. h. es werden entweder vor der eigentlichen Pfropfung oder auch zeitgleich mit ihr reaktive Zentren auf der Oberfläche des Substrats erzeugt, die im weiteren Verlauf der Reaktion als Ausgangspunkte für die eigentliche Polymerisation dienen. Diese Oberflächenaktivierung kann z. B. durch Gamma-Strahlung, ultraviolette Strahlung mit Wellenlängen kleiner als 180 nm, Plasmabehandlung, Ozonisierung, elektrische Entladungen, Flammenbehandlung, Makroinitiatoren oder Photoinitiatoren erfolgen.

Es ist aus US 4 189 364 bekannt, daß sich Polymeroberflächen durch Eintauchen in eine Lösung von 2-Hydroxyethylmethacrylat und Dimethacrylat und Bestrafung mit einer ⁶⁰Co-Quelle so modifizieren lassen, daß die neu erzeugte Oberfläche eine deutlich verbesserte Wasseraufnahme zeigt. Nachteilig an dieser Methode ist, daß der Einsatz von ⁶⁰Co- Quellen aufwendig und entsprechend kostspielig ist. Weiterhin ist die Art der von dieser Quelle ausgehenden Strahlung sehr unspezifisch und nicht auf die Oberfläche des zu modifizierenden Substrates beschränkt, was zu unerwünschten Veränderungen der mechanischen und chemischen Bulkeigenschaften des Polymeren führt.

Die Aktivierung einer Oberfläche mit ultravioletter Strahlung einer Wellenlänge kleiner als 180 nm setzt die weitgehende Abwesenheit von Sauerstoff während der Aktivierungsphase voraus, da dieser bei der genannten Wellenlänge eine sehr starke Absorption zeigt. Da andererseits die Aktivierung durch diese Methode, die letztendlich auf Bildung oxidierter Reaktionsstellen beruht, einen Mindestpartialdruck an Sauerstoff voraussetzt, ist ein reproduzierbarer Aktivierungsschritt im Rahmen eines technischen Verfahrens nur unter großen Schwierigkeiten möglich. In diesem Zusammenhang bereitet auch die kontinuierliche Intensitätsabnahme entsprechender Bestrahlungsröhren große Probleme. Daneben ist eine unerwünschte Veränderung der Bulkeigenschaften des Substrates durch die Bestrahlung schwer zu vermeiden, da bei derartig energiereicher Strahlung auch Kohlenstoff-Kohlenstoff-Bindungen gebrochen werden können.

Eine Plasmavorbehandlung, wie in EP 0 574 352 beschrieben, stellt ebenfalls einen unter Vakuum ablaufenden Prozeß dar, der das Verfahren praktisch auf einen Batch-Prozeß reduziert, zumindest aber eine kontinuierliche Prozeßführung stark erschwert. Weiterhin ist auch hier eine entsprechend aufwendige Geräteausstattung erforderlich. Zudem ist die Aktivierung aufgrund der Vielzahl an unabhängigen Plasmaparametern (Einsatz von Inert- und Reaktivgasen, Energieeintrag, Behandlungsdauer) schwierig zu reproduzieren.

Die Ozonisierung einer Polymeroberfläche zur Bildung oxidierter Reaktionszentren, wie z.B. in EP 0 378 511 beschrieben, ist aufgrund der toxikologischen Bedenklichkeit und der Flüchtigkeit von Ozon nur unter Anwendung besonderer Schutzmaßnahmen durchzuführen. Die reproduzierbare Einstellung entsprechender Ozonkonzentrationen, um im Rahmen der Qualitätssicherung eines technologischen Prozesses die gleichbleibende Qualität der hergestellten Produkte sicherstellen zu können, erfordert aufwendige Kontrollmechanismen.

Andere Methoden zur Bildung reaktiver Reaktionszentren wie z. B. Hydroperoxiden sind in US 4 311 573 oder US 4 589 964 beschrieben. Auch hier werden aufwendige Bestrahlungseinheiten oder toxikologisch bedenkliche Metallsalze eingesetzt.

Elektrische Entladungen, wie sie z.B. im Rahmen einer Korona-Behandlung zur Oberflächenaktivierung eingesetzt werden, sind aufgrund der methodenspezifischen Anforderungen im allgemeinen nur auf großflächige Substrate mit einfacher Geometrie, wie Folienbahnen oder extrudierte Profile, anwendbar. Analoges gilt auch für eine Flammenbehandlung von Polymeren, wobei in diesem Fall noch die stärkere thermische Belastung besonders exponierter Stellen des Substrates hinzukommt. Einen Vergleich beider Methoden mit denkbaren und bereits realisierten Anwendungen liefert z. B. K. W. Gerstenberg in Coating 9 (1994) 324 und Coating 10 (1994) 355.

Weitere Möglichkeiten zur Erzeugung von aktivierten Oberflächen bietet die Verwendung von Initiatormolekülen, wie Makroinitiatoren oder Photoinitiatoren.

Die Wirkung von Makroinitiatoren beruht darauf, daß vorgebildete Polymere mit reaktiven Gruppen auf das zu modifizierende Substrat aufgebracht werden. Die Anbindung an das Substrat ist in diesem Fall rein physikalisch. Die eigentliche Pfropfung wird durch eine thermische oder photochemische Anregung der entsprechenden reaktiven Gruppen des Makroinitiators gestartet. Diese Methode setzt einerseits die Synthese von häufig nicht kommerziell erhältlichen Makroinitiatoren voraus, andererseits muß die dauerhafte physikalische Anbindung des Makroinitiators an das jeweilige Substrat, auch unter Lösemittelund Temperatureinfluß gewährleistet sein.

Die Verwendung von Photoinitiatoren zur Pfropfung basiert im wesentlichen auf einer Kettenübertragung und ist universell anwendbar. Initiatorradikale oder Polymerradikale abstrahieren dabei vom jeweiligen Substrat z.B. Wasserstoff- oder Chloratome und bilden Makroradikale, die die Pfropfpolymerisation der zugesetzten Monomeren auslösen. Wie von H. G. Elias in Makromoleküle Bd. 1 (1990) 572 ff. beschrieben, ist die erreichbare Pfropfausbeute dabei jedoch wegen der geringen Übertragungskonstanten von Polymerradikalen sehr niedrig.

Die Pfropfung von HDPE, LDPE und Polystyrol mit Acrylsäure und Benzophenon als Photoinitiator in der Gasphase, die von K.Allmer et al. in J.Polym.Sc., Part A, 26, 2099 - 2111 (1988) beschrieben wurde, ist ein solches Verfahren mit niedrigen Übertragungskonstanten. Niedrigere Übertragungskonstanten bedeuten eine geringe chemische Bindung vom Polymer zum Substrat und damit in der Regel schlechte mechanische Eigenschaften der Beschichtung. Zudem eignet sich ein solches Verfahren nicht für Monomere, die nicht in die Gasphase überführbar sind, wie z. B. Natriumstyrolsulfonat. Auch die Methode von S.Tazuke et al., beschrieben in ACS Symp. Ser. 121, 217-241 (1980), bei der das Polymersubstrat in eine den Photoinitiator und das Monomer enthaltenden Lösung getaucht und bestrahlt wird, gehört zu den Verfahren, die niedrige Übertragungskonstanten aufweisen.

Dagegen werden nach H.Kubota et al. I (J.Polym.Sc.:Polym.Ed.Lett.,19, 457-462 (1981)) PPund LDPE-Filme mit einer Lösung vorbehandelt, die den Photoinitator, nämlich wiederum Benzophenon, Anthrachinon oder Benzoylperoxid, und Polyvinylacetat als Träger für den Photoinitiator neben Aceton oder Chloroform als Lösungsmittel enthielt. Dadurch wurde der Photoinitiator nach dem Entfernen des Lösemittels auf der Substratoberfläche physikalisch fixiert. Mit diesem Verfahren konnte Methylmethacrylat in der Gasphase oder Acrylsäure und Methacrylsäure in flüssiger Phase mit hohen Ausbeuten auf die vorbehandelten Substratoberflächen gepfropft werden. H.Kubota et al II, J.Polym.Sc.:Polym.Ed.Lett., 20,17-21 (1982), haben den Einfluß verschiedener Lösemittel auf die Gasphasen-Pfropfung der Monomeren auf wie beschrieben vorbehandelte Substratoberflächen untersucht. Ein Nachteil dieses Verfahrens ist die Mitverwendung eines Filmbildners, nämlich Polyvinylacetat, als Träger für den Photoinitiator. Zum einen ist es nicht ohne weiteres möglich, den Photoinitiator so homogen wie erwünscht in dem Filmbildner zu verteilen, zum anderen ist es unvermeidlich, daß auch der Filmbildner auf das Substrat gepfropft wird, was die Einheitlichkeit der Beschichtung beeinträchtigt. Schließlich wird das Monomer nicht nur auf das zu modifizierende Substrat, sondern unvermeidlich auch auf den Filmbildner gepfropft, im Extremfall, je nach der Pfropfbarkeit des jeweiligen Substrats, praktisch ausschließlich auf den Filmbildner.

Z.P.Yao und B.Ränby haben ein kontinuierliches Verfahren beschrieben, bei dem Acrylamid oder Acrylsäure aufHDPE-Filme gepfropft wird (J.Appl.Pol.Sci., 40 1647 (1990)). Dazu wird der Film durch eine Lösung von Monomer und Benzophenon als Photoinitiator in Aceton als Lösemittel geführt ("presoaking") und bestrahlt. Im Falle von Acrylamid wirkte zusätzlich sublimierter Acrylamiddampf bei der strahleninduzierten Pfropfung mit. Das Verfahren eignet sich zur Beschichtung von flächigen Gebilden, wie Filmen. Eine grundlegende Modifizierung einer regellos geformten Substratoberfläche ist nicht möglich. Weiterhin ist nachteilig, daß die Zeit für das "presoaking" und die Bestrahlungszeit starr aneinander gekoppelt sind, da das Verfahren kontinuierlich arbeitet. Ein weiterer Nachteil besteht darin, daß eine Thermostatisierung der "presoaking"-Lösung nicht vorgesehen ist. Eine optimale Abstimmung der für den Erfolg entscheidenden Parameter, nämlich Konzentration von Initiator, Monomer und Lösemittel, Temperatur der Lösung, Zeitdauer des "presoaking" und Zeitdauer der Bestrahlung, ist nicht möglich.

Gegenstand der europäischen Patentanmeldung Nr. 0 872 512 ist ein Verfahren zur Modifizierung der Oberfläche von Polymersubstraten mittels photochemisch induzierter Pfropfpolymerisation, bei dem das Polymersubstrat zunächst mit einem Photoinitiator und mindestens einem aliphatisch ungesättigten Monomeren vorbehandelt und dann auf das vorbehandelte Polymersubstrat durch elektromagnetische Strahlung induziert mindestens ein weiteres aliphatisch ungesättigtes Monomer polymerisiert wird. Da bei der beschriebenen Art von Pfropfpolymerisation unter ökonomischen Reaktionsbedingungen nur kurzkettige Pfropfpolymere erhalten werden können, ist eine Hydrophilierung der modifizierten Oberfläche nur eingeschränkt möglich. Analoges gilt für eine Verminderung des Haft- bzw. Gleitreibungswiderstandes derart modifizierter Oberflächen.

Der vorliegenden Erfindung lag daher die Aufgabe zugrunde, ein technisch einfaches und ökonomisches Verfahren zur Modifizierung von beliebig gestalteten Polymeroberflächen durch eine kontrollierte Pfropfpolymerisation zu entwickeln.

### Kurzbeschreibung der Erfindung

Diese Aufgabe wurde erfindungsgemäß mit einem Verfahren zur Modifizierung der Oberfläche von Polymersubstraten durch Pfropfpolymerisation mit aliphatisch ungesättigten Monomeren gelöst, bei dem das Polymersubstrat zunächst mit einem Polymerisationsinitiator und mindestens einem aliphatisch ungesättigten Monomer vorbehandelt und dann auf das vorbehandelte Polymersubstrat mindestens ein im wesentlichen eigenschaftvermittelndes Polymer gepfropft wird.

DE 198 09 054 offenbart ein Verfahren, bei dem auf ein Polymersubstrat nach Vorbehandlung mit einem Monomeren weitere Polymere gepfropft werden können.

Gegenstand der vorliegenden Erfindung ist ein Verfahren zur Modifizierung der Oberfläche von Polymersubstraten mittels durch elektromagnetische Strahlung oder thermisch induzierter Pfropfreaktion mindestens eines olefinischen Monomers und mindestens eines Polymers, wobei das Polymersubstrat vor der Pfropfung mit dem mindestens einen Polymer mit einer Lösung aus
a) mindestens einem olefinisch ungesättigtem Monomer,
b) mindestens einem Thermoinitiator und/oder mindestens einem Photoinitiator,
c) gegebenenfalls einem Lösungsmittel
d) ein oder mehrere Polymeren vorbehandelt wird.

Die Pfropfung kann unmittelbar nach der Vorbehandlung erfolgen.

Das erfindungsgemäße Verfahren kann in mehreren Variationen ausgeübt werden. So kann das eigenschaftsvermittelnde Polymer direkt in die Reaktionslösung zur Vorbehandlung des Polymersubstrates miteingebracht werden, d. h., die Vorbehandlungslösung besteht aus Initiator (bzw. Initiatorenkombinationen), aliphatischem Monomer (bzw. Monomerenmischung), eigenschaftsvermittelndem Polymeren (bzw. Polymerenkombinationen) sowie gegebenenfalls einem zusätzlichen Lösemittel (bzw. Lösemittekombinationen) (Variante I).
In einem anderen Fall besteht die Vorbehandlungslösung lediglich aus Initiator (bzw. Initiatorenkombinationen), aliphatischem Monomer (bzw. Monomerenmischung) sowie gegebenenfalls einem zusätzlichen Lösemittel. Die Aufbringung des eigenschaftsvermittelnden Polymeren (bzw. Polymerenkombinationen), gegebenenfalls in Kombination mit einem aliphatischem Monomer (bzw. Monomerenmischung) sowie gegebenenfalls weiterer Komponenten, wie z. B. zusätzlicher Initiatoren (bzw. Initiatorenkombinationen) und Lösemitteln, geschieht in einem zeitlich nachgeordneten Schritt (Variante II). Variante II wird bevorzugt werden, wenn sich z. B. das Polymere nicht in ausreichendem Maße in der Vorbehandlungslösung löst.

Bei Variante I erfolgt die Pfropfung bzw. Polymerfixierung in einem zeitlich nachgeordneten Schritt durch elektromagnetische Bestrahlung (im Fall der Verwendung von Photoinitiatoren) bzw. durch Zufuhr thermischer Energie (im Fall der Verwendung von Thermoinitiatoren) bzw. in einer Kombination aus beiden Energiearten (im Fall gleichzeitiger Verwendung von Thermound Photoinitiatoren).

Bei Variante II erfolgt dagegen die Pfropfung bzw. Polymerfixierung entweder simultan mit der Aufbringung des eigenschaftsvermittelnden Polymeren (bzw. Polymerenkombinationen) oder in einem zeitlich nachgeordneten Schritt.

### Vorteile der Erfindung

Das erfindungsgemäße Verfahren weist eine bemerkenswerte Kombination von Vorteilen auf. Wie bei dem Verfahren nach der zuvor erwähnten europäischen Patentanmeldung Nr. 0 872 512 erzielt man mit beliebigen Monomeren bzw. Polymeren auf chemisch sehr verschiedenartigen Substraten dichte und gleichmäßige Beschichtungen von hervorragender Beständigkeit gegenüber Umgebungseinflüssen einschließlich von Lösemitteln und Abriebkräften, ohne daß es dazu aufwendiger Vakuumeinrichtungen bedürfte. Die zu modifizierenden Kunststoffoberflächen müssen keine bestimmte Topographie aufweisen; Objekte mit einer dreidimensionalen Struktur eignen sich ebensogut wie glatte Flächen. Dies ist insbesondere bei der nachträglichen Modifizierung von vorgefertigten Gegenständen von Vorteil. Gegenüber dem Verfahren nach der erwähnten europäischen Patentanmeldung besteht ein weiterer Vorteil darin, daß hydrophile bzw. in Kontakt mit Wasser haft- sowie gleitreibungsverminderte Oberflächen innerhalb sehr kurzer Prozeßzeiten zu realisieren sind, da kein Kettenwachstum auf der Substratoberfläche stattfinden muß, um zu modifizierten Oberflächen zu gelangen. Bei Bedarf lassen sich mit dem erfindungsgemäßen Verfahren, je nach Art des verwendeten eigenschaftsvermittelnden Polymeren, auch hydrophobe Oberflächenmodifizierungen erzielen. Da die Oberflächeneigenschaften letztlich durch das verwendete Polymer (bzw. Polymerenkombination) bestimmt werden, läßt sich prinzipiell, abhängig von der Verfügbarkeit entsprechend eigenschaftsbestimmender Polymerer, jede denkbare Art chemischer Obeflächenausstattung erreichen.

### Polymere Substrate

Zu den polymeren Substraten, deren Oberflächen erfindungsgemäß modifiziert werden, zählen Homo- und Copolymere, beispielsweise Polyolefine, wie Polyethylen (HDPE und LDPE), Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid, Polychloropren und Polytetrafluorethylen; Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril; Polykondensate, beispielsweise Polyester wie Polyethylenterephthalat und Polybutylenterephthalat; Polyamide wie Polycaprolactam, Polylaurinlactam und das Polykondensat aus Hexamethylendiamin und Adipinsäure; Polyetherblockamide, z. B. aus Laurinlactam und Polyethylenglykole; weiterhin Polyurethane, Polyether, Polycarbonate, Polysulfone, Polyetherketone, Polyesteramide und -imide, Polyacrylnitrtil, Polyacrylate und -methacrylate und Polysilikone. Auch Blends aus zwei oder mehr Polymeren oder Copolymeren lassen sich nach dem erfindungsgemäßen Verfahren an der Oberfläche modifizieren, ebenso wie Kombinationen aus verschiedenen Polymeren, die durch Verkleben, Verschweißen oder Zusammenschmelzen miteinander verbunden sind, einschließlich der Übergangsstellen.

### Olefinisch ungesättigte Monomere

Für das Verfahren eignen sich die verschiedenartigsten Monomeren mit mindestens einer olefinischen Doppelbindung, auch solche, die nicht oder nur schwierig in die Gasphase überführbar sind. Es hängt zu einem geringen Teil auch von der Art ihrer funktionellen Gruppen ab, in welchem Sinne die Oberflächen der Polymersubstrate modifiziert werden, z. B. hydrophil, hydrophob, lösemittelbeständiger, schmutzabweisend, bakterienabweisend, zellproliferationshemmend usw.. Die Monomeren werden auf jeden Fall bei der Vorbehandlung der Polymersubstrate angewandt, gegebenenfalls auch zusätzlich zur Beschichtung der vorbehandelten Polymersubstrate vor oder während der Pfropfpolymerisation. Die folgenden Erläuterungen beziehen sich auf die Monomeren für beide Verfahrensschritte.
Geeignete monoolefinische Monomere für die Vorbehandlung sind z. B. Acryl- oder Methacrylverbindungen der allgemeinen Formel

H₂C=CR¹-COOR² (I)

sowie Acrylamide und Methacrylamide der allgemeinen Formel

H₂C=CR¹-CONR²R³, (II)

wobei R¹ ein Wasserstoffatom oder eine Methylgruppe bedeutet und R² und R³ gleich oder verschieden sein können und jeweils ein Wasserstoffatom, ein Metallatom oder einen verzweigten oder unverzweigten aliphatischen, cycloaliphatischen, heterocyclischen oder aromatischen Kohlenwasserstoffrest mit bis zu 20 Kohlenstoffatomen oder einen solchen Kohlenwasserstoffrest, der durch Carboxylgruppen, Carboxylatgruppen, Sulfonatgruppen, Alkylaminogruppen, Alkoxygruppen, Halogene, Hydroxygruppen, Aminogruppen, Dialkylaminogruppen, Phosphatgruppen, Phosphonatgruppen, Sulfatgruppen, Carboxamidogruppen, Sulfonamidogruppen, Phosphonamidogruppen oder Kombinationen dieser Gruppierungen derivatisiert ist, bezeichnen.

Weitere geeignete monoolefinische Monomere für die Vorbehandlung sind Vinylverbindungen der allgemeinen Formeln

R⁴CH=CHR⁵ (III)

oder

H₂C=CH-COOR⁴ (IV)

und Malein- und Fumarsäurederivate der allgemeinen Formel

R⁴OOC-HC=CH-COOR⁴ (V)

wobei die Substituenten R⁴ gleich oder verschieden sein können und jeweils ein Wasserstoffatom, einen aromatischen Rest oder eine Methylgruppe bezeichnen oder die gleiche Bedeutung wie R² haben und R⁵ für ein Wasserstoffatom, eine Methylgruppe oder eine Hydroxylgruppe steht, dieselbe Bedeutung wie R² hat oder eine Ethergruppe der Formel -OR², in der R² wie zuvor definiert ist, bezeichnet.

Bevorzugte, unter die Formeln I bis V fallende Monomere für das Verfahren nach der Erfindung sind
- Carboxyl- oder Carboxylatgruppen enthaltende Monomere, insbesondere Acrylsäure, Methacrylsäure, Maleinsäure und deren Derivate,
- Sulfonatgruppen enthaltende Monomere, insbesondere Natriumstyrolsulfonat
- Hydroxylgruppen enthaltende Monomere, wie Hydroxyethylmethacrylat,
- Amino- oder Ammoniumgruppen enthaltende Monomere sowie
- Phosphatgruppen enthaltende Monomere.

Auch Monomere mit zwei olefinischen Doppelbindungen und der allgemeinen Formel

CH₂=CR¹-R⁶-CR¹=CH₂ (VI)

in denen R⁶ einen zweiwertigen organischen Rest bezeichnet und R¹ die angegebene Bedeutung hat, eignen sich zur Verwendung in dem erfindungsgemäßen Verfahren. Sie werden als Vernetzer vorzugsweise in Verbindung mit monoolefinischen Monomeren eingesetzt, zweckmäßig in Mengen von 0,5 bis 10 Molprozent, bezogen auf die monoolefinischen Monomere, wodurch vernetzte Pfropfcopolymere entstehen. Die Vernetzer können bereits in der Lösung zur Vorbehandlung enthalten sein.

Von den geeigneten monoolefinischen Monomeren I bis V seien z.B. erwähnt: (Meth)acrylsäure, Methyl(meth)acrylat, Ethyl(meth)acrylat, Butyl(meth)acrylat, 2-Ethylhexyl(meth)acrylat, tert.-Butylaminoethyl(meth)acrylat, 2-Hydroxyethyl(meth)acrylat, 4-Hydroxybutyl(meth)acrylat, (Meth)acrylsäureamid, (Meth)acrylnitril, Vinylsulfonsäure, Vinylphosphonsäure, Styrolsulfonsäure, Natriumvinylsulfonat, Natriumstyrolsulfonat, Natriumvinylphosphonat, Natriumvinylstyrolsulfonat, tert.-Butylaminoethylmethacrylat, Dimethylaminoethylmethacrylat, Diethylaminoethylmethacrylat, Dimethylaminoneopentylacrylat, Maleinsäure, Maleinsäureanhydrid, Maleinsäurediethylester, Maleinsäureimid, Fumarsäure und Fumarsäuredimethylester.

Beispiele für geeignete diolefinische Monomere VI sind u.a. 1,4-Butandioldi(meth)acrylat, Ethylenglykoldimethacrylat, Polyethylenglykol(600)-diacrylat, N,N-Methylenbisacrylamid oder Divinylbenzol.

### Photoinitiatoren

Als Polymerisationsinitiatoren lassen sich alle gängigen Photoinitiatoren verwenden, wie z. B. Benzoine, Benzoinderivate, Benzilketale, α-Hydroxyketone, Peroxide, Azoverbindungen, Azoxyverbindungen, Diazosulfonate, Diazosulfone, Diazothioether, Diacyldiazomethane, Diarylsulfide, heteroaromatisch substituierte Disulfide, Diaroylsulfide, Tetraalkylthiuramdisulfide, Dithiocarbonate oder Dithiocarbamate, speziell Benzophenon, Acetophenon, Fluorenon, Benzaldehyd, Propiophenon, Anthrachinon, Carbazol, 3- oder 4-Methylacetophenon, 4,4'-Dimethoxybenzophenon, Allylacetophenon, 2,2'-Diphenoxyacetophenon, Benzoin, Benzoinmethylether, Benzoinethylether, Benzoinpropylether, Benzoinacetat, Benzoinphenylcarbamat, Benzoinacrylat, Benzoinphenylether, Benzoylperoxid, Dicumylperoxid, Azobisisobutyronitril, Phenyldisulfid, Acylphosphanoxide oder Chlormethylanthrachinon sowie Kombinationen hiervon.

### Thermoinitiatoren

Unter Thermoinitiatoren im Sinne dieser Erfindung werden Verbindungen verstanden, die beim Erhitzen unter Bildung freier Radikale zerfallen, die ihrerseits die Pfropfpolymerisation auslösen. Von den geeigneten Verbindungsklassen seien beispielsweise genannt: Azoverbindungen, Peroxide, Hydroperoxide, Perester, Persulfale, Peroxycarbonate, Ketonperoxide, Disulfide sowie Dibenzylderivate bzw. Kombinationen dieser Verbindungen. Diese Thermoinitiatoren, wie z. B. das 2.2'-Azo-bis-(isobuttersäurenitril), sind gut bekannt, und viele sind im Handel erhältlich.

### Eigenschaftbestimmende Polymere

Als eigenschaftsbestimmende Polymere lassen sich alle verfügbaren Makromoleküle verwenden, die in der gewählten Reaktionsumgebung löslich sind und darüber hinaus mit den im Verlauf der Reaktion entstehenden Radikalen reagieren. Dies sind insbesondere Homo- und Copolymere mit Kohlenstoff-Wasserstoff-Verbindungen, wie z.B. Polyacrylsäure, Polymethacrylsäure, Polyvinylpyrrolidon, Polyacrylsäuresalze, Polyacrylsäureamid, Poly(acrylsäureamid-co-acrylsäure), Polyacrylnitril, Polyvinylacetat, Polyvinylalkohol, Polyethylenglykole, Polyolefine, wie Polyethylen (HDPE und LDPE), Poly(ethylen-coacrylsäure), Poly(ethylen-co-methacrylsäure), Poly(ethylen-co-acrylsäure) Natriumsalz, Polyethylenimin, Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid; Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril; Polykondensate, beispielsweise Polyester, wie Polyethylenterephtalat und Polybutylenterephtalat; Polyamide, wie Polycaprolactam, Polylaurinlactam und das Polykondensat aus Hexamethylendiamin und Adipinsäure; Polyetherblockamide, z. B. aus Laurinlactam und Polyethylenglykol mit durchschnittlich 8, 12, oder 16 Ethyloxygruppen; weiterhin Polyurethane, Polyether, Polycarbonate, Polysulfone, Polyetherketone, Polyesteramide und -imide, Polyacrylnitrtil, Polyacrylate und -methacrylate oder Polysilikone.

Technisch interessant sind hydrophobe oder hydrophile Polymere, z. B. zur Herstellung von hydrophilen Sperrschichten auf hydrophoben Substrakten oder umgekehrt oder z. B. zur nachträglichen Hydrophilierung hydrophoben Substratoberflächen.

### Vorbehandlung der Substratoberflächen

Es ist ein wesentliches Merkmal der Erfindung, daß das Polymersubstrat zunächst mit einem Photoinitiator und/oder einem Thermoinitiator und mindestens einem Monomer vorbehandelt wird. Die Vorbehandlung erfolgt zweckmäßig mit einer Lösung dieser Komponenten ineinander, wobei die Menge des Initiators im allgemeinen 0,01 bis 40 Gew.-%, vorteilhaft 0,05 bis 20 Gew.-%, bezogen auf das Monomer, beträgt. Die Wahl des Initiators und des Monomers richtet sich u.a. nach der Löslichkeit dieser Komponenten ineinander und der chemischen Natur des Substrates. Das Monomer muß das Polymersubstrat anquellen können und somit die Penetration des Initiators in die oberflächennahen Zonen des Polymersubstrats ermöglichen. Ob auch das für die Vorbehandlung verwendete Monomer die erwünschten oberflächenmodifizierenden Eigenschaften vermittelt, spielt zunächst keine Rolle. Man kann also durchaus mit einem Monomer vorbehandeln, das das Polymersubstrat gut anquillt, den Initiator gut löst und penetrieren läßt, aber nicht die letztlich gewünschten modifizierenden Eigenschaften vermittelt, und in der Pfropfphase mit dem primär eigenschaftsvermittelnden Polymeren arbeiten. Die optimalen Kombinationen von Substratpolymer, Initiator und Monomer für die Vorbehandlung lassen sich durch orientierende Versuche unschwer ermitteln, exemplarische Vorgehensweisen sind in den folgenden Beispielen aufgezeigt. Beispielsweise sind (Meth)acrylsäure und/oder ihre Ester in Verbindung mit Azobisisobutyronitril gut für die Vorbehandlung von Polyamid-, Polyurethan-, Polyetherblockamid- oder Polyesteramid- oder - imid-Substraten geeignet.

Es ist zweckmäßig, daß die Mischung zur Vorbehandlung des Polymersubstrats zumindest im wesentlichen aus dem Initiator und mindestens einem Monomer besteht. Die Mischung kann also ausschließlich aus den genannten Bestandteilen bestehen oder eine definierte Menge, z. B. bis zu 80, vorteilhaft bis zu 50 Gewichtsprozent eines Lösemittels sowie gegebenenfalls bereits das eigenschaftsvermittelnde Polymer in Mengen bis zu 50 Gewichtsprozent enthalten. Die Zugabe eines Lösemittels kann z. B. dann erforderlich sein, wenn sich das Monomer und der Initiator nicht oder nicht gut zu einer homogenen Mischung oder Lösung mischen lassen bzw. das eigenschaftsvermittelnde Polymer anderenfalls nicht löslich ist oder das Substrat mit dem Monomer allein zu stark quillt. Insbesondere für eine nachträgliche Modifizierung von englumigen Hohlräumen ist es von entscheidender Bedeutung, daß eine zu starke Quellung, verbunden mit einer Volumenexpansion des zu modifizerenden Materials und somit einer Verkleinerung des Lumens vermieden wird. Geeignete Lösemittel sind z. B. Wasser, Aceton, Methylethylketon, Butanon, Cyclohexanon, Diethylether, Tetrahydrofuran, Dioxan, Methanol, Ethanol, Propanol, Butanol, Cyclohexanol, Dimethylacetamid, Dimethylsulfoxid, Dimethylformamid, Heptan, Cyclohexan, Benzol, Toluol, Dichlormethan, Trichlormethan, Ethylacetat, Propylacetat, Amylacetat oder Acetonitril. Die optimale Art und Menge des Lösemittels lassen sich für eine bestimmte Aufgabenstellung durch orientierende Versuche unschwer ermitteln.

Die Behandlung des Polymersubstrats mit dem Initiator und dem Monomer soll so erfolgen, daß die Oberfläche des Polymersubstrats leicht quillt. Die Behandlungsdauer hängt von der jeweiligen Kombination von Polymersubstrat, Initiator, Monomer und gegebenenfalls eigenschaftsvermittelndem Polymer sowie von der Temperatur ab. Sie braucht nur 1 bis 60 Sekunden zu betragen und beträgt vorteilhaft 1 bis 30 Sekunden. Die optimalen Temperaturen und Behandlungszeiten lassen sich unschwer durch orientierende Versuche ermitteln; typische Vorgehensweisen sind in den Beispielen aufgezeigt. Vorzugsweise erfolgt die Behandlung des Polymersubstrats mit dem Initiator und dem aliphatisch ungesättigten Monomer bei einer Temperatur von -20 bis 200 °C, besonders bevorzugt bei Temperaturen von 0 bis 80 °C und insbesondere bei 10 bis 60 °C.

Lösungen aus oder mit dem Monomer, dem Initiator und gegebenenfalls dem eigenschaftsbestimmenden Polymeren (Variante I) zur Behandlung des Polymersubstrats können durch übliche Beschichtungsverfahren, wie Aufsprühen, Bestreichen oder Tauchen, auf das Polymersubstrat aufgebracht werden.

In vielen Fällen ist es zweckmäßig, vor der Pfropfpolymerisation von dem vorbehandelten Substrat oberflächlich anhaftendes Monomer und anhaftenden Initiator zu entfernen. Dies kann z.B. durch kurzzeitiges Tauchen (zweckmäßig einige Sekunden bis zu etwa einer Minute) in ein geeignetes Lösemittel (wie zuvor beschrieben), in welchem das verwendete eigenschaftsvermittelnde Polymer nur geringfügig löslich ist, geschehen.

Alternativ kann man das vorbehandelte Substrat mit Lösemittel abspülen. Wenn man anhaftendes Monomer und anhaftenden Initiator entfernt, erhält man bei der Pfropfpolymerisation eine in noch höherem Maße extraktionsbeständige und homogene Beschichtung. Zwischen der Vorbehandlung des Polymersubstrats und der Aufbringung des Polymers kann neben den Reinigungsschritten (s. oben) auch ein Trocknungsschritt erfolgen.

### Pfropfpolymerisation

Die Pfropfpolymerisation der Monomeren wird durch Erhitzen des Substrats ausgelöst, wenn ein Thermoinitiator verwendet wurde, und durch Bestrahlen bei Verwendung eines Photoinitiators. Das Polymersubstrat kann, wie beschrieben, vollständig vorbehandelt (Variante I) oder in einem zeitlich nachgeordneten Schritt mit dem eigenschaftsbestimmenden Polymeren (bzw. Polymerenkombination) versehen werden (Variante II). Statt die eigenschaftsbestimmenden Polymere, wie erwähnt, nach üblichen Beschichtungsverfahren aufzubringen, kann man auch das Aufbringen mit der thermischen Pfropfung verbinden, indem man das vorbehandelte Substrat in eine erhitzte Lösung des eigenschaftsbestimmenden Polymeren taucht. Als Lösemittel sind die für die Vorbehandlung brauchbaren Lösemittel geeignet, es können jedoch auch andere Lösungsmittel verwendet werden, in denen das eigenschaftsvermittelnde Polymere gut löslich ist. Man arbeitet im allgemeinen mit Lösungen, die 2 bis 50 Gewichtsprozent Polymer enthalten. Das vorbehandelte Polymersubstrat steht in Kontakt mit einer flüssigen Phase, nämlich der Polymerlösung. Es kann also getaucht oder mit der Polymerlösung beschichtet sein.

Bei Verwendung eines Photoinitiators wird die Pfropfpolymerisation der Monomeren sowie des eigenschaftsbestimmenden Polymeren (bzw. Polymerenkombination) im allgemeinen durch elektromagnetische Strahlung im Wellenlängenbereich von 180 bis 1 200 nm, bevorzugt von 200 bis 800 nm und insbesondere von 200 bis 400 nm induziert. Die Strahlung in diesem Wellenlängenbereich ist relativ weich und greift in aller Regel das Polymersubstrat nicht an. Es ist ein besonderes Merkmal der vorliegenden Erfindung, daß die Pfropfung über den Initiator erfolgt und nicht oder nur in untergeordnetem Maße durch strahlungsinduzierte Kettenspaltung im Polymersubstrat. Man arbeitet z. B. mit einem Excimer-UV-Strahler der Fa. Heraeus, D-63801 Neuostheim mit kontinuierlicher Strahlung, z. B. mit XeCl oder XeF als Strahlermedium. Im Prinzip sind auch Quecksilberdampflampen mit breitem UV-Spektrum und Strahlungsanteilen im sichtbaren Bereich bzw. in den o. g. Bereichen brauchbar. Die Expositionszeiten betragen im allgemeinen 30 bis 300 Sekunden. Die Expositionszeiten hängen u.a. von der Geometrie der bestrahlten Substrate ab. Gegenstände mit ausgeprägter dreidimensionaler Charakteristik müssen gedreht werden und erfordern längere Bestrahlung. Die strahlungsinduzierte Pfropfpolymerisation läuft vorteilhaft im Temperaturbereich von 0 bis 100 °C ab.

Bei Verwendung eines Thermoinitiators wird die Pfropfpolymerisation durch Erhitzen des vorbehandelten und gegebenenfalls mit einem weiteren Monomer versehenen Polymersubstrates ausgelöst.

Die angewandten Temperaturen hängen von der Zerfallsrate des Thermoinitiators ab; sie müssen auf jeden Fall unterhalb der Schmelz- bzw. Erweichungstemperatur des Polymersubstrats liegen. Bei Verwendung eines Thermoinitiators arbeitet man im allgemeinen bei 50 bis 150 °C. Sowohl bei der Variante I als auch bei der Variante II kann man die erforderliche Temperatur elegant durch Strahlungsheizung einstellen, z. B. mit Infrarotstrahlen oder Mikrowellen. Die erforderlichen Bestrahlungszeiten lassen sich durch orientierende Versuche unschwer ermitteln; sie liegen im allgemeinen bei 1 bis 60 min.

### Wahlweise Nachbehandlung

Nach der Pfropfpolymerisation kann man etwaige Restmonomere durch Extraktion mit einem Lösemittel entfernen. So können z. B. hydrophile Monomere mit Wasser extrahiert werden. Weiterhin lassen sich funktionelle Gruppen der Beschichtung in üblicher Weise ganz oder teilweise in Derivate überführen. So kann man Carboxylgruppen zu Carboxylatgruppen neutralisieren, Carbonestergruppen zu Hydroxyl- oder Carbonsäuregruppen sowie Carbonamid- oder Nitrilgruppen zu Carboxylgruppen verseifen. Weitere Derivatisierungen von erfindungsgemäß modifizierten Polymersubstraten können nach allgemeinen Verfahren (H. Beyer, Lehrbuch der organischen Chemie, S. Hirzel Verlag, Stuttgart, 1988, S. 260 ff) vorgenommen werden.

### Verwendung der modifizierten Polymersubstrate

Weitere Gegenstände der vorliegenden Erfindung sind die Verwendung der erfindungsgemäß modifizierten Polymersubstrate zur Herstellung von medizintechnischen Erzeugnissen und die so hergestellten medizintechnischen Erzeugnisse als solche. Die Erzeugnisse können erfindungsgemäß modifizierte Polymersubstrate enthalten oder aus diesen bestehen. Solche Erzeugnisse basieren vorzugsweise auf Polyamiden, Polyurethanen, Polyetherblockamiden, Polyesteramiden oder -imiden, PVC, Polyolefinen, Polysilikonen, Polysiloxanen, Polymethacrylat oder Polyterephthalaten, die erfindungsgemäß modifizierte Oberflächen aufweisen, vorzugsweise mit Carboxyl- oder Carboxylatgruppen, Sulfonatgruppen, Hydroxylgruppen und/oder Aminogruppen enthaltenden Monomeren modifizierte Oberflächen. Medizintechnische Erzeugnisse dieser Art sind beispielsweise und insbesondere Katheter, Blutbeutel, Drainagen, Führungsdrähte und Operationsbestecke, Dialyse- und Oxygenatormembranen, Intraokularlinsen und Kontaktlinsen.

Außerdem sind Gegenstände der vorliegenden Erfindung die Verwendung der erfindungsgemäß an der Oberfläche modifizierten Polymersubstrate zur Herstellung von Hygieneerzeugnissen und die Hygieneerzeugnisse als solche. Die Erzeugnisse können erfindungsgemäß modifizierte Polymersubstrate enthalten oder aus diesen bestehen. Die obigen Ausführungen über bevorzugte Materialien für medizinische Erzeugnisse gelten entsprechend. Solche Hygieneerzeugnisse sind beispielsweise Zahnbürsten, Toilettensitze, Kämme und Verpackungsmaterialien. Unter die Bezeichnung Hygieneartikel fallen auch andere Gegenstände, mit denen viele Menschen in Berührung kommen, wie Telefonhörer, Handläufe von Treppen, Tür- und Fenstergriffe sowie Haltegurte und -griffe in öffentlichen Verkehrsmitteln.

Des weiteren sind Gegenstände der vorliegenden Erfindung die Verwendung der erfindungsgemäß an der Oberfläche modifizierten Polymersubstrate zur Herstellung von hydrophilierten Gebrauchsmaterialien und die Gebrauchsmaterialien als solche. Hierzu zählen beispielsweise modifizierte Folien für den Druckbereich, insbesondere Inkjetfolien, Freizeitkleidung wie Surf- oder Taucheranzüge sowie Schlauchmaterialien für Fermentationsreaktoren.

Zur weiteren Erläuterung der vorliegenden Erfindung werden die folgenden Beispiele gegeben, die die Erfindung weiter erläutern, nicht aber ihren Umfang begrenzen sollen, wie er in den Patentansprüchen dargelegt ist.

### Beispiel 1:

Ein Polyurethanschlauch (Pellethane®) wird auf einen vorbereiteten Draht aufgespannt und zugeschmolzen. Im Anschluß wird er mit einem Stück Tesafilm am Draht befestigt. Es wird eine Lösung aus 95 g Acrylsäure und 5 g 2,2-Dimethoxy-2-phenylacetophenon hergestellt. Der vorbereitete Schlauch wird für 20 Sekunden in diese, auf 35 °C thermostatisierte Lösung eingetaucht. Im Anschluß wird der so vorbehandelte Schlauch für 20 Sekunden in eine auf 35° C thermostatisierte Lösung aus 5 g Polyacrylsäure-Natriumsalz, 29 g entmineralisiertem Wasser, 6 g Natriumstyrolsulfonat, 58 g Acrylsäure und 2 g 2,2-Dimethoxy-2-phenylacetophenon getaucht. Der Schlauch wird dann in einer Drehvorrichtung arretiert, die Drehung wird gestartet (60U/min) und der Schlauch wird 4 Minuten belichtet. Als Belichtungseinheit findet eine Excimer-Strahlungseinheit der Fa. Heraeus (Nennleistung 1000 Watt, 308 nm) Verwendung. Der Abstand zur Strahlungsquelle beträgt 4 cm.

Nach Beendigung der Bestrahlung wird der Schlauch zwei Stunden in VE-Wasser von 60 ° C gelagert, im Anschluß für zwei Stunden bei 60 °C getrocknet.

| Analyse des Kontaktwinkels: | |
|---|---|
| Behandelter Polyurethanschlauch (Pellethane®) | 10° |
| Unbehandelter Polyurethanschlauch (Pellethane®) | 101° |

### Beispiel 2:

Ein Polyurethanschlauch (Pellethane®) wird auf einen vorbereiteten Draht aufgespannt und zugeschmolzen. Im Anschluß wird er mit einem Stück Tesafilm am Draht befestigt. Es wird eine Lösung aus 95 g Acrylsäure und 5 g 2,2-Dimethoxy-2-phenylacetophenon hergestellt. Der vorbereitete Schlauch wird für 20 Sekunden in diese, auf 35 °C thermostatisierte Lösung eingetaucht. Im Anschluß wird der so vorbehandelte Schlauch für 20 Sekunden in eine auf 35° C thermostatisierte Lösung aus 5 g Polyacrylsäure, 27 g entmineralisiertem Wasser, 6 g Natriumstyrolsulfonat, 58 g Acrylsäure und 4 g 2,2-Dimethoxy-2-phenylacetophenon getaucht. Der Schlauch wird dann in einer Drehvorrichtung arretiert, die Drehung wird gestartet (60U/min) und der Schlauch wird 4 Minuten belichtet. Als Belichtungseinheit findet eine Excimer-Strahlungseinheit der Fa. Heraeus (Nennleistung 1000 Watt, 308 nm) Verwendung. Der Abstand zur Strahlungsquelle beträgt 4 cm.

Nach Beendigung der Bestrahlung wird der Schlauch zwei Stunden in VE-Wasser von 60 °C gelagert, im Anschluß für zwei Stunden bei 60 °C getrocknet.

| Analyse des Kontaktwinkels: | |
|---|---|
| Behandelter Polyurethanschlauch (Pellethane®) | 15° |
| Unbehandelter Polyurethanschlauch (Pellethane®) | 102° |

### Beispiel 3:

Ein Polyurethanschlauch (Pellethane®) wird auf einen vorbereiteten Draht aufgespannt und zugeschmolzen. Im Anschluß wird er mit einem Stück Tesafilm am Draht befestigt. Es wird eine Lösung aus 95 g Acrylsäure und 5 g 2,2-Dimethoxy-2-phenylacetophenon hergestellt. Der vorbereitete Schlauch wird für 20 Sekunden in diese, auf 35 °C thermostatisierte Lösung eingetaucht. Im Anschluß wird der so vorbehandelte Schlauch für 20 Sekunden in eine auf 35 °C thermostatisierte Lösung aus 5 g Polyvinylpyrrolidon, 27 g entmineralisiertem Wasser, 6 g Natriumstyrolsulfonat, 58 g Acrylsäure und 4 g 2,2-Dimethoxy-2-phenylacetophenon getaucht. Der Schlauch wird dann in einer Drehvorrichtung arretiert, die Drehung wird gestartet (60U/min) und der Schlauch wird 4 Minuten belichtet. Als Belichtungseinheit findet eine Excimer-Strahlungseinheit der Fa. Heraeus (Nennleistung 1000 Watt, 308 nm) Verwendung. Der Abstand zur Strahlungsquelle beträgt 4 cm.

Nach Beendigung der Bestrahlung wird der Schlauch zwei Stunden in VE-Wasser von 60 °C gelagert, im Anschluß für zwei Stunden bei 60 °C getrocknet.

| Analyse des Kontaktwinkels: | |
|---|---|
| Behandelter Polyurethanschlauch (Pellethane®) | 12° |
| Unbehandelter Polyurethanschlauch (Pellethane®) | 100° |

### Beispiel 4:

Ein Polyurethanschlauch (Pellethane®) wird auf einen vorbereiteten Draht aufgespannt und zugeschmolzen. Im Anschluß wird er mit einem Stück Tesafilm am Draht befestigt. Der vorbereitete Schlauch wird für 30 Sekunden in eine auf 40 °C thermostatisierte Lösung aus 5 g Polyvinylpyrrolidon, 27 g entmineralisiertem Wasser, 6 g Natriumstyrolsulfonat, 58 g Acrylsäure und 4 g 2,2-Dimethoxy-2-phenylacetophenon getaucht. Der Schlauch wird dann in einer Drehvorrichtung arretiert, die Drehung wird gestartet (60U/min) und der Schlauch wird 4 Minuten belichtet. Als Belichtungseinheit findet eine Excimer-Strahlungseinheit der Fa. Heraeus (Nennleistung 1000 Watt, 308 nm) Verwendung. Der Abstand zur Strahlungsquelle beträgt 4 cm.
Nach Beendigung der Bestrahlung wird der Schlauch zwei Stunden in VE-Wasser von 60 °C gelagert, im Anschluß für zwei Stunden bei 60° C getrocknet.

| Analyse des Kontaktwinkels: | |
|---|---|
| Behandelter Polyurethanschlauch (Pellethane®) | 18° |
| Unbehandelter Polyurethanschlauch (Pellethane®) | 101° |

### Beispiel 5:

Ein Polyurethanschlauch (Pellethane®) wird auf einen vorbereiteten Draht aufgespannt und zugeschmolzen. Im Anschluß wird er mit einem Stück Tesafilm am Drakt befestigt. Der vorbereitete Schlauch wird für 40 Sekunden in eine auf 45 °C thermostatisierte Lösung aus 5 g Natriumstyrolsulfonat, 59 g Acrylsäure und 2 g Azobisisobutyronitril getaucht. Der Schlauch wird dann in einer Apparatur, die eine thermostatisierte Stickstoffatmosphäre von 80 °C enthält, für 30 Minuten gelagert. Danach wird der Schlauch zwei Stunden in VE-Wasser von 60 °C gelagert, im Anschluß für zwei Stunden bei 60 °C getrocknet.

| Analyse des Kontaktwinkels: | |
|---|---|
| Behandelter Polyurethanschlauch (Pellethane®) | 28° |
| Unbehandelter Polyurethanschlauch (Pellethane®) | 102° |

## Patentansprüche

1. Verfahren zur Modifizierung der Oberfläche von Polymersubstraten mittels durch elektromagnetische Strahlung oder thermisch induzierter Pfropfreaktion mindestens eines olefinisch ungesättigten Monomers und mindestens eines Polymers
**dadurch gekennzeichnet,**
**daß** das Polymersubstrat vor der Pfropfung mit dem mindestens einem Polymer mit einer Lösung aus
a) mindestens einem olefinisch ungesättigtem Monomer,
b) mindestens einem Thermoinitiator
und/oder mindestens einem Photoinitiator,
c) gegebenenfalls einem Lösungsmittel
d) ein oder mehreren Polymeren
vorbehandelt wird.

2. Verfahren nach Anspruch 1,
**dadurch gekennzeichnet,**
**daß** die Pfropfung unmittelbar nach der Vorbehandlung erfolgt.

3. Verfahren nach Anspruch 1 oder 2,
**dadurch gekennzeichnet,**
**daß** die Lösung zusätzlich
e) einen Vernetzer
enthält.

4. Verfahren nach einem der Ansprüche 1 bis 3,
**dadurch gekennzeichnet,**
**daß** zwischen der Vorbehandlung und der Aufbringung des Polymers ein Trocknungsoder Reinigungsschritt erfolgt.

5. Verfahren nach einem der Ansprüche 1 bis 4,
**dadurch gekennzeichnet,**
**daß** das mindestens eine Monomer für die Vorbehandlung eine Acryl- oder Methacrylverbindung der allgemeinen Formel
H₂C=CR¹-COOR² (I)
oder ein Acrylamid und Methacrylamid (I) der allgemeinen Formel
H₂C=CR¹-CONR²R³ (II)
ist, wobei
R¹ ein Wasserstoffatom, oder eine Methylgruppe bedeutet, R² und R³ gleich oder verschieden sein können und jeweils ein Wasserstoffatom, ein Metallatom oder einen verzweigten oder unverzweigten aliphatischen, cycloaliphatischen, heterocyclischen oder aromatischen Kohlenwasserstoffrest mit bis zu 20 Kohlenstoffatomen oder einen solchen Kohlenwasserstoffrest, der durch Carboxylgruppen, Carboxylatgruppen, Sulfonatgruppen, Alkylaminogruppen, Alkoxygruppen, Halogene, Hydroxygruppen, Aminogruppen, Dialkylaminogruppen, Phosphatgruppen Phosphonatgruppen, Sulfatgruppen, Carboxamidogruppen, Sulfonamidogruppen, Phosphonamidogruppen oder Kombinationen dieser Gruppierungen derivatisiert ist, bezeichnen.

6. Verfahren nach einem nach einem der Ansprüche 1 bis 4
**dadurch gekennzeichnet,**
**daß** das mindestens eine Monomer für die Vorbehandlung eine Vinylverbindung der allgemeinen Formeln,
R⁴CH=CHR⁵ (III)
oder
H₂C=CH-COOR⁴ (IV)
oder ein Malein- und Fumarsäurederivat der allgemeinen Formel
R⁴OOC-HC=CH-COOR⁴ (V)
ist, wobei die Substituenten R⁴ gleich oder verschieden sein können und jeweils ein Wasserstoffatom, einen aromatischen Rest oder eine Methylgruppe bezeichnen oder die gleiche Bedeutung wie R² in Anspruch 5 haben und R⁵ für ein Wasserstoffatom, eine Methylgruppe oder eine Hydroxylgruppe steht, dieselbe Bedeutung wie R² hat oder eine Ethergruppe der Formel -OR², in der R² wie in Anspruch 5 definiert ist, be-zeichnet.

7. Verfahren nach einem der Ansprüche 3 bis 6,
**dadurch gekennzeichnet,**
**daß** als Vernetzer Monomere mit zwei olefinischen Doppelbindungen der allgemeinen Formel
CH₂=CR¹-R⁶-CR¹=CH₂ (VI)
in der R⁶ einen zweiwertigen organischen Rest bezeichnet und R¹ die in Anspruch 5 angegebene Bedeutung hat.

8. Verfahren nach einem der Ansprüche 1 bis 7,
**dadurch gekennzeichnet,**
**daß** als Photoinitiator ein Benzoin, Benzoinderivat, Benzilketal oder α-Hydroxyketon verwendet wird.

9. Verfahren nach einem der Ansprüche 1 bis 7,
**dadurch gekennzeichnet,**
**daß** als Thermoinitiator eine Azoverbindung oder eine Peroxoverbindung verwendet wird.

10. Verfahren nach Anspruch 2,
**dadurch gekennzeichnet,**
**daß** das vorbehandelte Polymersubstrat bei der Propfpolymerisation in eine Lösung des Polymers getaucht ist.

11. Verfahren nach einem der Ansprüche 1 bis 10,
**dadurch gekennzeichnet,**
**daß** bei Verwendung eines Photoinitiators die Wellenlänge der elektromagnetischen Strahlung 180 bis 1 200 nm beträgt.

12. Verfahren nach einem der Ansprüche 1 bis 10,
**dadurch gekennzeichnet,**
**daß** die Pfropfung bei Verwendung eines Thermoinitiators bei einer Temperatur von 50 - 150 °C initiiert wird.

13. Verfahren nach Anspruch 12,
**dadurch gekennzeichnet,**
**daß** die Pfropfung durch Infrarot- oder Mikrowellenstrahlung initiiert wird.

14. Verfahren nach einem der Ansprüche 1 bis 13,
**dadurch gekennzeichnet,**
**daß** das Polymer hydrophil ist.

15. Verfahren nach einem der Ansprüche 1 bis 13
**dadurch gekennzeichnet,**
**daß** das Polymer hydrophob ist.

16. Verwendung der gemäß den Ansprüchen 1 bis 15 modifizierten Polymersubstrate zur Herstellung von medizintechnischen Erzeugnissen.

17. Verwendung der gemäß den Ansprüchen 1 bis 15 modifizierten Polymersubstrate zur Herstellung von Hygieneerzeugnissen.

18. Medizintechnische Erzeugnisse, die ein gemäß dem Verfahren nach einem der Ansprüche 1 bis 15 modifiziertes Polymersubstrat enthalten oder daraus bestehen.

19. Hygieneerzeugnisse, die ein gemäß dem Verfahren nach einem der Ansprüche 1 bis 15 modifiziertes Polymersubstrat enthalten oder daraus bestehen.

## Claims

1. A process for modifying the surface of polymer substrates using a graft reaction, induced by electromagnetic radiation or heat, of at least one olefinically unsaturated monomer and at least one polymer,
**characterized in that** it comprises
pretreating the polymer substrate, prior to grafting with the at least one polymer, with a solution made from
a) at least one olefinically unsaturated monomer,
b) at least one thermal initiator
and/or at least one photoinitiator,
c) where appropriate, a solvent, and
d) one or more polymers.

2. A process according to claim 1,
**characterized in that**
the grafting immediately follows the pretreatment.

3. A process according to claim 1 or 2,
**characterized in that**
the solution additionally comprises
e) a crosslinking agent.

4. A process according to any one of claims 1 to 3,
**characterized in that**
a drying or cleaning step takes place between the pretreatment and the application of the polymer.

5. A process according to any one of claims 1 to 4,
**characterized in that**
the at least one monomer for the pretreatment is an acrylic or methacrylic compound of the general formula
H₂C=CR¹-COOR² (I)
or an acrylamide or methacrylamide of the general formula
H₂C=CR¹-CONR²R³ (II)
where
R¹ is a hydrogen atom or a methyl group, and each of R² and R³, which may be identical or different, is a hydrogen atom, a metal atom or a branched or unbranched aliphatic, cycloaliphatic, heterocyclic or aromatic hydrocarbon radical having up to 20 carbon atoms or a hydrocarbon radical of this type which has been derivatized with carboxyl groups, carboxylate groups, sulphonate groups, alkylamino groups, alkoxy groups, halogens, hydroxyl groups, amino groups, dialkylamino groups, phosphate groups, phosphonate groups, sulphate groups, carboxamido groups, sulphonamido groups, phosphonamido groups or combinations of these groups.

6. A process according to any one of claims 1 to 4,
**characterized in that**
the at least one monomer for the pretreatment is a vinyl compound of the general formulae
R⁴CH=CHR⁵ (III)
or
H₂C=CH-COOR⁴ (IV)
or a maleic or fumaric acid derivative of the general formula
R⁴OOC-HC=CH-COOR⁴ (V)
where each of the substituents R⁴, which may be identical or different, is a hydrogen atom, an aromatic radical or a methyl group or is as defined for R² in claim 5, and R⁵ is a hydrogen atom, a methyl group or a hydroxyl group or is as defined for R² or is an ether group of the formula -OR², where R² is as defined in claim 5.

7. A process according to any one of claims 3 to 6,
**characterized in that**
monomers with two olefinic double bonds and the general formula
CH₂=CR¹-R⁶-CR¹=CH₂ (VI)
are used as crosslinking agents, where R⁶ is a bivalent organic radical and R¹ is as defined in claim 5.

8. A process according to any one of claims 1 to 7,
**characterized in that**
benzoin, a benzoin derivative, benzil ketal or an α-hydroxyketone is used as photoinitiator.

9. A process according to any one of claims 1 to 7,
**characterized in that**
an azo compound or a peroxo compound is used as thermal initiator.

10. A process according to claim 2,
**characterized in that**
the pretreated polymer substrate is immersed into a solution of the polymer during the graft polymerization.

11. A process according to any one of claims 1 to 10,
**characterized in that**
if a photoinitiator is used the wavelength of the electromagnetic radiation is from 180 to 1 200 nm.

12. A process according to any one of claims 1 to 10,
**characterized in that**
the grafting is initiated using a thermal initiator at a temperature of from 50 to 150°C.

13. A process according to claim 12,
**characterized in that**
the grafting is initiated by infrared or microwave radiation.

14. A process according to any one of claims 1 to 13,
**characterized in that**
the polymer is hydrophilic.

15. A process according to any one of claims 1 to 13,
**characterized in that**
the polymer is hydrophobic.

16. The use of a polymer substrate modified according to any of claims 1 to 15 for producing products for medical technology.

17. The use of a polymer substrate modified according to any of claims 1 to 15 for producing hygiene products.

18. A product for medical technology which comprises, or consists of, a polymer substrate modified by the process according to any one of claims 1 to 15.

19. A hygiene product which comprises, or consists of, a polymer substrate modified by the process according to any one of claims 1 to 15.

## Revendications

1. Procédé pour la modification de la surface de substrats polymères, au moyen d'une réaction de greffage, induite thermiquement ou par un rayonnement électromagnétique, d'au moins un monomère à insaturation oléfinique et d'au moins un polymère,
**caractérisé en ce que**
le substrat polymère est prétraité avant le greffage avec le au moins un polymère, par une solution à base de
a) au moins un monomère à insaturation oléfinique,
b) au moins un thermoamorceur et/ou au moins un photoamorceur,
c) éventuellement un solvant,
d) un ou plusieurs polymères.

2. Procédé selon la revendication 1,
**caractérisé en ce que**
le greffage est effectué immédiatement après le prétraitement.

3. Procédé selon la revendication 1 ou 2.
**caractérisé en ce que**
la solution contient en outre
e) un agent de réticulation.

4. Procédé selon l'une quelconque des revendications 1 à 3
**caractérisé en ce qu'**
une étape de nettoyage ou de séchage est effectuée entre le prétraitement et l'application du polymère.

5. Procédé selon l'une quelconque des revendications 1 à 4,
**caractérisé en ce que**
le au moins un monomère pour le prétraitement est un composé acrylique ou méthacrylique de formule générale
H₂C=CR¹-COOR² (I)
ou un acrylamide et méthacrylamide de formule générale
H₂C=CR¹-CONR²R³ (II)
R¹ représentant un atome d'hydrogène ou un groupe méthyle et R² et R³ pouvant être identiques ou différents et représentant chacun un atome d'hydrogène, un atome d'un métal ou un radical hydrocarboné aliphatique ramifié ou non ramifié, cycloaliphatique, hétérocyclique ou aromatique, ayant jusqu'à 20 atomes de carbone, ou un radical hydrocarboné de ce type qui est transformé en dérivé par des groupes carboxy, des groupes carboxylate, des groupes sulfonate, des groupes alkylamino, des groupes alcoxy, des halogènes, des groupes hydroxy, des groupes amino, des groupes dialkylamino, des groupes phosphate, des groupes phosphonate, des groupes sulfate, des groupes carboxamido, des groupes sulfonamido, des groupes phosphonamido ou des associations de ces groupements.

6. Procédé selon l'une quelconque des revendications 1 à 4,
**caractérisé en ce que**
le au moins un monomère pour le prétraitement est un composé vinylique de formules générales
R⁴CH=CHR⁵ (III)
ou
H₂C=CH-COOR⁴ (IV)
et des dérivés d'acide maléique et d'acide fumarique de formule générale
R⁴OOC-HC=CH-COOR⁴ (V)
les substituants R⁴ pouvant être Identiques ou différents et représentant chacun un atome d'hydrogène, un radical aromatique ou un groupe méthyle, ou ayant la même signification que R² dans la revendication 5, et R⁵ représentant un atome d'hydrogène, un groupe méthyle ou un groupe hydroxy, ayant la même signification que R² ou représentant un groupe éther de formule -OR², dans laquelle R² est tel que défini dans la revendication 5.

7. Procédé selon l'une quelconque des revendications 3 à 6,
**caractérisé en ce qu'**
on utilise comme agent de réticulation des monomères comportant deux doubles liaisons oléfiniques, de formule générale
CH₂=CR¹-R⁶-CR¹=CH₂ (VI)
dans laquelle R⁶ représente un radical organique divalent et R¹ a la signification donnée dans la revendication 5.

8. Procédé selon l'une quelconque des revendications 1 à 7,
**caractérisé en ce qu'**
on utilise comme photoamorceur une benzoïne, un dérivé de benzoïne, un benzilecétal ou l'α-hydroxycétone.

9. Procédé selon l'une quelconque des revendications 1 à 7,
**caractérisé en ce qu'**
on utilise comme photoamorceur un composé azo ou un composé peroxo.

10. Procédé selon la revendication 2,
**caractérise en ce que**,
lors de la polymérisation par greffage, le substrat polymère prétraité est immergé dans une solution du polymère.

11. Procédé selon l'une quelconque des revendications 1 à 10,
**caractérisé en ce que**,
dans le cas d'utilisation d'un photoamorceur, la longueur d'onde du rayonnement électromagnétique va de 180 à 1 200 nm.

12. Procédé selon l'une quelconque de revendications 1 à 10,
**caractérisé en ce que**
le greffage, dans le cas d'utilisation d'un thermoamorceur, est déclenché à une température de 50 à 150°C.

13. Procédé selon la revendication 12.
**caractérisé en ce que**
le greffage est déclenché par un rayonnement infrarouge ou hyperfréquence.

14. Procédé selon l'une quelconque des revendications 1 à 13,
**caractérisé en ce que**
le polymère est hydrophile.

15. Procédé selon l'une quelconque des revendications 1 à 13,
**caractérisé en ce que**
le polymère est hydrophobe.

16. Utilisation des substrats polymères modifiés selon les revendications 1 à 15, pour la fabrication de produits médicaux.

17. Utilisation des substrats polymères modifiés selon les revendications 1 à 15, pour la fabrication de produits d'hygiène.

18. Produits médicaux qui contiennent un substrat polymère modifié conformément au procédé selon l'une quelconque des revendications 1 à 15, ou consistent en celui-ci.

19. Produits d'hygiène qui contiennent un substrat polymère modifié conformément au procédé selon l'une quelconque des revendications 1 à 15, ou consistent en celui-ci.
